# EUROPÄISCHE PATENTSCHRIFT

(11) **EP 4 353 666 B1**
(45) Veröffentlichungstag und Bekanntmachung des Hinweises auf die Patenterteilung: **23.04.2025**
(21) Anmeldenummer: 23202171.7
(22) Anmeldetag: 06.10.2023
(51) Int. Cl.: B66C 1/66, F16B 45/00, F16B 21/07, F16G 15/08

(54) **ANSCHLAGPUNKT**
STOP POINT
POINT DE BUTÉE

(30) Priorität: 12.10.2022 DE 202022105768 U
(43) Veröffentlichungstag der Anmeldung: 17.04.2024
(73) Patentinhaber: J.D. Theile GmbH & Co. KG, 58239 Schwerte (DE)
(72) Erfinder: FRÖSE, Andreas, 58239 Schwerte (DE); MAG, Dirk, 58239 Schwerte (DE); FOITZIK, Martin, 58239 Schwerte (DE); HAVERKAMP, Martin, 58644 Iserlohn (DE)
(74) Vertreter: Haverkamp Patentanwälte PartG mbB

(56) Entgegenhaltungen:
- EP-B1- 3 263 948
- EP-B1- 3 494 079
- DE-B4- 10 164 593
- US-A- 2 487 085

## Beschreibung

Die Erfindung betrifft einen Anschlagpunkt mit einem ein Anschlussmittel zum Anschließen des Anschlagpunktes an einen damit handzuhabenden Gegenstand aufweisendes Unterteil und mit einem gegenüber dem Unterteil drehbaren und daran angeschlossenen Oberteil mit einem Anschlussorgan zum Anschließen eines Hebe-, Anschlag- oder Zurrmittels, wobei zur drehbaren Lagerung des Oberteils gegenüber dem Unterteil das Oberteil eine obere, sich in axialer Richtung konisch verjüngende Lagerfläche, das Unterteil eine untere, sich in derselben Richtung konisch verjüngende Lagerfläche aufweisen und wobei gemäß einer Ausgestaltung zwischen den beiden Lagerflächen Wälzlagerkörper mit einer durch eine Drehachse und eine um die Drehachse rotationssymmetrische Mantelfläche definierten Form angeordnet sind, deren Drehachsen in Richtung der konischen Verjüngung der Lagerflächen ausgerichtet sind.

Derartige Anschlagpunkte, seien sie als Ringschraube oder Anschlagwirbel ausgebildet, werden typischerweise zum Heben oder Verzurren von Gegenständen verwendet. Angeschlossen werden die Anschlagpunkte mit ihrem Unterteil an dem zu handhabenden Gegenstand, wobei typischerweise zum Handhaben eines solchen Gegenstandes mehrere Anschlagpunkte zum Einhängen eines entsprechenden Hebegeschirres verwendet werden. Als Anschlussmittel verfügen vor allem solche Anschlagpunkte, die nicht dauerhaft an einem handzuhabenden Gegenstand befestigt sein sollen, über einen Gewindebolzen als Teil des Unterteils, mit dem der Anschlagpunkt, in eine hierzu komplementäre Innengewindebohrung des handzuhabenden Gegenstandes eingeschraubt, mit diesem Gegenstand verspannt wird. Als Anschlussorgan des Oberteils zum Anschließen eines Hebe-, Anschlag- oder Zurrmittels kann je nach der gewünschten Verwendung eine Öse oder ein Gabelkopf vorgesehen sein. In beiden Fällen kann das Anschlussorgan so ausgestaltet sein, dass ein Hebe-, Anschlag- oder Zurrmittel unmittelbar daran angeschlossen werden kann oder dass in ein solches Anschlussorgan eine Hakenöse eingesetzt ist, an der dann das Hebe-, Anschlag- oder Zurrmittel angeschlossen wird. Bei Ausgestaltungen, bei denen der Anschlagpunkt an einem handzuhabenden Gegenstand dauerhaft verbleibt, besteht die Möglichkeit, dessen Unterteil mit dem handzuhabenden Gegenstand zu verschweißen. Dann verfügt der Anschlagpunkt als Anschlussmittel über eine entsprechende Schweißgeometrie.

Das Oberteil eines solchen Anschlagpunktes ist gegenüber dem Unterteil drehbar, damit sich bei Anliegen einer auf das Anschlussorgan des Oberteils wirkenden Zugkraft dieses und damit das Oberteil in Zugrichtung ausrichten kann. Die Drehbeweglichkeit des Oberteils gegenüber dem Unterteil kann auf unterschiedliche Weise realisiert sein. Gemäß einer ersten Ausgestaltung ist eine Gleitlagerung zwischen dem Oberteil und dem Unterteil vorgesehen. Ein solcher Anschlagpunkt ist aus EP 3 736 459 B1 bekannt. Bei einem solchermaßen konzipierten Anschlagpunkt ist vorgesehen, dass das Oberteil vor bzw. beim Anlegen der Zugkraft bei einer Querlastbeanspruchung, also bei einer Zuglastbeanspruchung, durch die die Zugkraft nicht in Richtung der Drehachse des Oberteils wirkt, manuell auszurichten ist, um einem möglichen Verkanten des Oberteils gegenüber dem Unterteil durch die anliegende Zugkraft vorzubeugen. Auch bei anliegender axialer Zugkraft ist infolge der auf die Lagerpartner des Gleitlagers wirkenden Kräfte mitunter eine Drehbeweglichkeit des Oberteils gegenüber dem Unterteil nicht mehr möglich oder zumindest beeinträchtigt. In manchen Fällen wird jedoch eine Drehbeweglichkeit auch in dieser Situation gewünscht.

Zum Verbessern der Drehbeweglichkeit des Oberteils gegenüber dem Unterteil bei anliegender axialer Zuglast sind Anschlagpunkte vorgeschlagen worden, die anstelle eines Gleitlagers Wälzkörper verwenden. In DE 20 2012 100 764 U1 ist ein solcher Anschlagpunkt, bei dem zwei in axialer Richtung übereinander liegende Kugellager zur Erzielung der Drehbeweglichkeit vorgesehen sind. Ein diesbezüglich ähnlich aufgebauter Anschlagpunkt ist aus DE 201 21 118 U1 bekannt. Bei diesen Anschlagpunkten werden die als Wälzkörper eingesetzten Kugeln zugleich für den Zusammenhalt von Oberteil und Unterteil genutzt. Die als Wälzkörper eingesetzten Kugeln sind jeweils in einem Kugelkanal angeordnet, von denen jeder durch eine jeweils in das Unterteil und in das Oberteil eingebrachte, sich zu dem Kugelkanal ergänzende Halbbohrung gebildet ist. Jede oberteilseitige Halbbohrung ist über eine Bestückungsbohrung zugänglich, durch die, nachdem das Oberteil und das Unterteil entsprechend zueinander positioniert sind, die Kugeln als Wälzkörper in den jeweiligen Kugelkanal eingebracht werden. Zwar ist bei einem solchen Anschlagpunkt ein Drehen des Oberteils gegenüber dem Unterteil in unbelastetem Zustand verbessert, jedoch soll auch bei dem in DE 20 2012 100 764 U1 beschriebenen Abschlagpunkt bei anliegender Zuglast in Richtung der Drehachse des Oberteils eine Verspannung zwischen Oberteil und Unterteil bewirkt werden, um ein ungewolltes Verdrehen des Anschlussorgans zu verhindern oder zumindest zu hemmen.

DE 101 64 593 B4 offenbart einen Anschlagpunkt mit einer erhöhten Kippfestigkeit gegenüber auf das Oberteil einwirkenden Zugbelastungen aus seitlicher Richtung. Um dieses zu erreichen werden zwei Rillenkugellager verwendet, wobei ein erstes Rillenkugellager zwischen der Unterseite des Kopfabschnittes des Unterteils und einem entsprechenden Lagerabschnitt des Oberteils angeordnet ist, während ein zweites Rillenkugellager mit einem größeren Durchmesser und somit mit einem größeren radialen Abstand zur Drehachse zwischen Oberteil und Unterteil zwischen der Unterseite des Oberteils und einer dem Unterteil zugeordneten Stützscheibe angeordnet ist. Die Stützscheibe ist auf ein hierfür vorgesehenes zylindrisch ausgeführtes Ende der als Unterteil dienenden Verankerungsschraube gepresst.

In EP 3 263 948 B1 ist ein Anschlagpunkt beschrieben, dessen Belastbarkeit gegenüber einem Anschlagpunkt mit kugelgelagertem Oberteil dadurch verbessert ist, dass anstelle von Kugeln als Wälzlagerkörper Kegel verwendet werden. Die Lagerflächen von Oberteil und Unterteil verjüngen sich in Richtung zum Anschlussorgan des Oberteils. EP 3 494 079 B1 offenbart einen weiteren Anschlagpunkt, dessen Oberteil unter Zwischenschaltung von kegelstumpfförmigen Wälzkörpern gegenüber dem Unterteil gelagert ist. Bei diesem Stand der Technik ist die Neigungsrichtung der Wälzkörper entgegengesetzt zu der in EP 3 263 948 B1 beschriebenen Neigungsrichtung. Auch bei diesen beiden vorbekannten Anschlagpunkten dienen die Wälzkörper zum Zusammenhalt von Unterteil und Oberteil. Vorgesehen ist, dass die Wälzlagerkörper über eine Bestückungsbohrung in den Lagerkanal eingesetzt werden. Auch wenn die Nennbelastbarkeit eines solchen Anschlagpunktes durch Einsatz von Kegeln als Wälzlagerkörper gegenüber kugelgelagerten Anschlagpunkten verbessert ist, kann die Drehbeweglichkeit des Oberteils gegenüber dem Unterteil nur gewährleistet werden, wenn die Lagerflächen ebenso wie die Wälzlagerkörper mit hoher Präzision gefertigt werden. Das Lager muss spielfrei sein. Anderenfalls besteht die Gefahr, dass die kegelförmigen Wälzlagerkörper in dem Lagerkanal verkanten und dadurch die gewünschte Drehbeweglichkeit behindern oder gar blockieren. Eingesetzt werden bei diesen beiden Anschlagpunkten Kegel als Wälzlagerkörper, um bei einer Drehung Wegunterschiede an dem im Durchmesser kleineren Lagerflächenabschnitt gegenüber dem im Durchmesser größeren Lagerflächenabschnitt auszugleichen. Bereits das Einführen der einzelnen Kegel als Wälzlagerkörper in den Lagerkanal und deren bestimmungsgemäße Ausrichtung darin ist problematisch. Bei dem aus EP 3 494 079 B1 vorbekannten Anschlagpunkt, welcher gemäß dem Oberbegriff des Anspruchs 1 ausgeführt ist, wird das Unterteil in eine unterseitige Ausnehmung des Oberteils von unten eingesetzt. Der Durchmesser des Kopfabschnittes ist daher deutlich kleiner als die unterseitige Öffnungsweite des Oberteils zum Einsetzen des Unterteils. Aus diesem Grunde sind die Wälzlagerkörper nur mit einem geringen Winkel gegenüber der Drehachse von Oberteil gegenüber Unterteil geneigt.

Ausgehend von dem zuletzt diskutierten Stand der Technik liegt der Erfindung die Aufgabe zugrunde, einen Anschlagpunkt vorzuschlagen, dessen Oberteil unter Zwischenschaltung von nicht kugeligen Wälzkörpern gegenüber dem Unterteil gelagert ist, ohne dass die zu dem Stand der Technik beschriebenen Montageprobleme gegeben sind, und an den geringere Anforderungen an eine Spielfreiheit seiner Lagerfläche gestellt sind.

Gelöst wird diese Aufgabe erfindungsgemäß durch einen eingangs genannten, gattungsgemäßen Anschlagpunkt mit den weiteren Merkmalen des Anspruchs 1.

Bei diesem Anschlagpunkt hat man sich von dem herkömmlichen Konzept, einen Zusammenhalt von Oberteil und Unterteil über die geneigt mit ihrer Drehachse angeordneten Wälzkörper bereitzustellen, verabschiedet. Bei diesem Anschlagpunkt ist das Unterteil ausgelegt, das Oberteil zumindest abschnittsweise zu durchgreifen. Mithin verfügt das Oberteil über eine zentrisch angeordnete Durchbrechung als Unterteilaufnahme, in der das Unterteil angeordnet ist. Teil des Unterteils ist ein Verschlusskörper, der an den Schaftabschnitt des Unterteils angeschlossen ist und unterseitig das Oberteil in radialer Richtung zumindest abschnittsweise untergreift. Funktional bezüglich des Anschlagpunktes bilden Unterteil und Verschlusskörper eine gemeinsame Funktionseinheit, gegenüber der das Oberteil drehbar ist. In den nachfolgenden Ausführungen ist, solange sich nichts anderes ergibt, mit dem Begriff "Unterteil" derjenige Bestandteil der Funktionseinheit "Unterteil" gemeint, welches den Kopfabschnitt und den Schaftabschnitt aufweist. Bei einer Ausgestaltung, bei der der Schaftabschnitt mit einem Außengewinde ausgerüstet ist, kann dieser Teil der Funktionseinheit "Unterteil" auch mit Schraubenteil angesprochen werden. Der axiale Zusammenhalt von Oberteil und Unterteil ist somit durch den Kopfabschnitt und den Verschlusskörper des Unterteils bereitgestellt. Die Lagerfläche des Unterteils, bereitgestellt durch einen Mantelflächenabschnitt seines Kopfabschnittes, dient hierbei für den axialen Zusammenhalt in der einen Richtung, während der das Oberteil untergreifende Verschlusskörper für den Zusammenhalt in der entgegengesetzten Richtung dient. Diese Konzeption erlaubt einen Zusammenbau des Anschlagpunktes, bei dem die Wälzlagerkörper in ihrer bestimmungsgemäßen Raumlage auf der durch das Oberteil bereitgestellten Lagerfläche positioniert werden können ebenso wie den Einsatz von in einem Lagerkörperkäfig angeordneten Wälzlagerkörper. Im letzteren Fall wird eine bestimmungsgemäße Ausrichtung der nicht kugeligen Wälzlagerkörper hinsichtlich der Ausrichtung ihrer Drehachse in Neigungsrichtung der Lagerflächen durch einen solchen Lagerkörperkäfig gewährleistet. Darüber hinaus dient ein solcher Wälzlagerkörper zum dauerhaften Halten der Wälzlagerkörper in ihrer bestimmungsgemäßen Raumlage. Dann ist es unerheblich, ob das Lager Spiel hat oder nicht. Diese Konzeption erlaubt auch eine Ausbildung eines Anschlagpunktes, bei dem zum Bewirken einer Drehmitnahme zwischen Oberteil und Unterteil zum Verspannen des Unterteils an einem handzuhabenden Gegenstand eine Drehmitnahme, wie etwa in EP 3 736 459 B1 beschrieben, bewirkt werden soll. Die Lagerfunktion der Wälzlagerkörper wird dann durch die im Zuge der Kopplung von Oberteil und Unterteil vorgenommene Lagerspaltvergrößerung nicht beeinträchtigt.

Wird eine auf das Oberteil wirkende Zuglast angelegt, befinden sich die Lagerflächen selbsttätig wieder in ihrer bestimmungsgemäßen axialen Positionierung zueinander ohne Lagerspalt.

Geschlossen wird der zwischen der Lagerfläche des Oberteils und derjenigen des Unterteils befindliche, in einer Vormontagestellung offene Wälzlagerkörperkanal, nachdem auf die Lagerfläche des Oberteils die Wälzlagerkörper, typischerweise in einem Lagerkörperkäfig gehalten, aufgelegt worden sind, durch anschließendes Einsetzen des Unterteils in die zentrale Durchbrechung des Oberteils, wobei der Schaft diese zentrale Durchbrechung des Oberteils durchgreift. Dann ist der Lagerkanal durch die zur Anlage an den Wälzlagerkörpern gelangende Lagerfläche des Unterteils geschlossen. In einem nachfolgenden Schritt wird der die Unterseite des Oberteils untergreifende Verschlusskörper an den Schaftabschnitt des Unterteils angeschlossen. Dieser Anschluss erfolgt in axialer Richtung. Dieser Anschluss kann, muss aber nicht drehmomentschlüssig vorgenommen werden. Vorteilhaft bei einer solchen Auslegung des Anschlagpunktes ist nicht nur seine vereinfachte Montage, sondern auch, dass die in dem Lagerkanal befindlichen Wälzlagerkörper typischerweise mit ihrem Lagerkörperkäfig durch Entfernen des Verschlusskörpers, auch wieder zugänglich sind. Dies erlaubt einen Austausch der Wälzlagerkörper bei Verschleiß und/oder ein Nacharbeiten der Lagerflächen, falls überhaupt erforderlich.

Die Verjüngungsrichtung der Lagerflächen von Oberteil und Unterteil und damit die Neigungswinkel der Drehachsen der Wälzlagerkörper weisen in Richtung zu dem Verschlusskörper sowie in Richtung der Drehachse des Oberteils gegenüber dem Unterteil.

Das Vorsehen eines Verschlusskörpers, angeschlossen an den Schaftabschnitt des Unterteils hat ferner zum Vorteil, dass hierdurch das Lagerspiel der Drehbeweglichkeit des Oberteils gegenüber dem Unterteil eingestellt werden kann. Montiert wird ein solcher Verschlusskörper typischerweise in axialer Richtung auf den Schaftabschnitt des Unterteils, sodass in Abhängigkeit von der finalen axialen Position des Verschlusskörpers das Lagerspiel eingerichtet werden kann.

Bei einer Ausführung des Unterteils, bei dem der Verschlusskörper über den Gewindeauslauf des Gewindeabschnittes zum Kopfabschnitt des Unterteils hin auf dieses aufgeschraubt ist, kann, was in einem Ausführungsbeispiel vorgesehen ist, dieser Teil des Unterteils durch eine handelsübliche, entsprechend gehärtete Schraube mit einem Kopfabschnitt, dessen Unterseite in Richtung zum Gewindeschaft hin geneigt ausgeführt ist, realisiert sein. Derartige Schrauben weisen typischerweise einen Neigungswinkel der Kopfunterseite von 45° gegenüber der Längsachse auf. Bei einer solchen Ausgestaltung kann der Anschlagpunkt besonders kostengünstig hergestellt werden.

Während bei vorbekannten Anschlagpunkten mit nicht kugeligen Wälzlagerkörpern die Bestückungsbohrungen so ausgelegt werden müssen, dass derartige Wälzkörper mit ihrer Drehachse durch diese hindurchgeführt werden und dieses bei dem erfindungsgemäßen Anschlagpunkt nicht erforderlich ist, sind die Lagerflächen zur Aufnahme einer höheren Traglast so ausgebildet und geneigt, dass die darin befindlichen nicht kugeligen Wälzlagerkörper mit ihrer Drehachse zwischen 30° und 60° geneigt sind. Um eine Drehbeweglichkeit sowohl bei axialer Zugbelastung als auch bei radialer Zugbelastung in gleicher Weise zu ermöglichen, ist in einem bevorzugten Ausführungsbeispiel vorgesehen, dass die Längsachsen der Wälzlagerkörper mit der Drehachse des Oberteils einen Winkel von 45 Grad oder etwa 45 Grad einschließen. Dann ist eine Drehbeweglichkeit von Oberteil gegen Unterteil vor allem auch bei einer axial anliegenden Zugbelastung gewährleistet und es besteht nicht die Gefahr, dass auf das Anschlussorgan des Oberteils bei einer solchen Zugbelastung wirkende Drehmomente auf die typischerweise als Gewindebolzen ausgebildeten Anschlussmittel des Unterteils an dem handzuhabenden Gegenstand übertragen werden. Dadurch ist die Handhabungssicherheit verbessert.

Ermöglicht wird eine solche Neigung der Lagerflächen sowie der Drehachsen der Wälzlagerkörper durch den vorgesehenen Verschlusskörper, der eine Montage in axialer Richtung ermöglicht, wie dieses vorbeschrieben ist. Vorteilhaft ist aufgrund der Neigung auch, dass die Durchbrechung des Oberteils, durch die der Schaft des Unterteils hindurchzuführen ist, nicht übermäßig groß ausgeführt zu werden braucht. In axialer Richtung überkragt der Kopfabschnitt des Unterteils in radiale Richtung nach außen die Durchbrechung des Oberteils, durch den der Schaft des Unterteils hindurchgeführt ist. Bei einer solchen Neigung der Drehachsen der Wälzlagerkörper können mit einem solchen Anschlagpunkt höhere, vor allem axiale Zuglasten aufgenommen werden.

In einer Ausgestaltung ist vorgesehen, dass der Schaftabschnitt des Unterteils einen Anschlagabsatz aufweist. Dieser ist mit seiner Anschlagfläche von dem Kopfabschnitt wegweisend ausgeführt. Der Verschlusskörper verfügt über einen komplementär dazu ausgeführten Gegenanschlag. Bei einer solchen Ausgestaltung ist die Montageposition des Verschlusskörpers an dem Schaftabschnitt durch diese beiden zusammenwirkenden Anschläge vorgegeben. Vor dem Hintergrund der vorbeschriebenen Vorteile dieses Anschlagpunktes in Bezug auf die Ausführungen des Lagers ist es im Unterschied zu vorbekannten Anschlagpunkten mit einer Lagerung durch nicht kugelige Wälzlagerkörper nicht erforderlich, dass die Wälzlagerkörper spielfrei in dem Lagerkanal angeordnet sind. Daher ist es grundsätzlich nicht erforderlich bei diesem Anschlagpunkt in Abhängigkeit von den Herstellungstoleranzen von Lagerflächen und Wälzlagerkörpern den Verschlusskörper an unterschiedlichen axialen Positionen des Schaftabschnittes des Unterteils positionieren zu müssen.

Der Verschlusskörper ist typischerweise nach Art einer Scheibe ausgelegt, deren Unterseite zu dem handzuhabenden Gegenstand weist und damit die Anschlagfläche bildet, mit der der Anschlagpunkt mit dem handzuhabenden Gegenstand verspannt wird. Vorteilhaft an einer solchen scheibenartigen Ausgestaltung des Verschlusskörpers ist, dass dann die der Anschlagfläche gegenüberliegende Oberseite, und zwar diejenige Fläche des Verschlusskörpers, die zu der Unterseite des Oberteils weist, als weitere Lager- bzw. Abstützfläche des Oberteils gegenüber dem Unterteil bei einer Querlastbeanspruchung genutzt werden kann.

Zum Anschließen des Verschlusskörpers verfügt dieser, vor allem wenn er nach Art einer Scheibe ausgeführt ist, vorzugsweise über eine den Schaftabschnitt des Unterteils einfassende Wand. Diese erstreckt sich in axialer Richtung von dem scheibenartigen Grundkörper und zwar vorzugsweise in Richtung zu dem Kopfabschnitt hin. Der an die Scheibe des Verschlusskörpers angeformte Wandabschnitt wird vorzugsweise zum Anschließen des Verschlusskörpers an das Unterteil genutzt. Gemäß einer Ausgestaltung eines Anschlusses der Verschlussscheibe an das Unterteil ist vorgesehen, dass die Innenseite dieser Verriegelungswand verfügt über ein erstes Verriegelungsmittel verfügt, während der von der Verriegelungswand eingefasste Schaftabschnitt das hierzu komplementäre Verriegelungsmittel trägt. Diese Verriegelung ist konzipiert, damit der Verschlusskörper in axialer Richtung kraftschlüssig, beispielsweise formschlüssig an den Schaftabschnitt des Unterteils angeschlossen werden kann. Gemäß einer Ausgestaltung ist in die Innenseite der Verriegelungswand eine umlaufende Verriegelungsrille eingebracht. Komplementär dazu trägt der Verriegelungsschaft an entsprechender axialer Position einen Verriegelungswulst. Bei an dem Verriegelungsschaft montiertem Verschlusskörper greift der Verriegelungswulst in die Verriegelungsrille ein. Das Vorsehen einer an den Verschlusskörper angeformten Verriegelungswand geringer Dicke nutzt eine gewisse radiale Materialelastizität derselben, um den Verriegelungswulst in die Verriegelungsrille einpressen zu können. Die Verriegelungswand weist zur erleichterten Montage an dem oberseitigen Abschluss ihrer Innenseite eine Fase auf. Die vorbeschriebenen Verriegelungsmittel können auch in umgekehrter Positionierung vorgesehen sein, sodass dann der Verriegelungsschaft eine umlaufende Verriegelungsrille und die Verriegelungswand den komplementären Verriegelungswulst tragen. Es versteht sich, dass auch eine mehrfache Anordnung möglich ist, bei der zwei oder auch mehr derartiger komplementärer Verriegelungsmittel axial zueinander benachbart vorgesehen sein können.

In einer anderen Ausgestaltung des Anschlusses des Verschlusskörpers an das Unterteil ist vorgesehen, dass das zu dem Kopfabschnitt des Unterteils weisende Ende dieser typischerweise zylindrischen Wand als Anschlagfläche ausgebildet ist, die mit der Unterseite des Kopfabschnittes verspannt wird. Typischerweise wirkt diese freie Endfläche dieser Wand gegen die von dem Kopfabschnitt bereitgestellte Lagerfläche. Zum Verspannen des Verschlusskörpers mit dem freien Ende seiner zum Kopfabschnitt weisenden umlaufenden, beispielsweise zylindrischen Wand an der Unterseite des Kopfabschnittes ist diese Wand innenseitig mit einem zu dem Gewinde des das Oberteil durchgreifenden Gewindeschaftes des als Schraubenteil anzusprechenden Unterteils komplementären Innengewinde ausgerüstet. Durch Aufschrauben des Verschlusskörpers auf das Gewinde des Schaftabschnittes wird die Verspannung herbeigeführt. Die umlaufende Wand erstreckt sich dabei typischerweise über einen Endabschnitt des Gewindeschaftes und in einem bevorzugten Ausführungsbeispiel auch über den Gewindeauslauf hinaus. Durch das Aufschrauben des Verschlusskörpers über den Gewindeauslauf in Richtung zum Kopfabschnitt hinaus wird das Innengewinde der Wand in den Schaftabschnitt hineingepresst, sodass der Verschlusskörper bei einer bestimmungsgemäßen Benutzung des Anschlagkopfes hinreichend drehmomentschlüssig mit dem zweiten Bestandteil des Unterteils verspannt ist. Vorteilhaft ist bei einer solchen Auslegung des Anschlagpunktes, auch ohne dass der Verschlusskörper über den Gewindeauslauf auf den Gewindeschaft zum Kopfabschnitt hin aufgeschraubt ist, dass auf das Anschlagorgan des Anschlagpunktes einwirkende Querkräfte über den Abschnitt der axialen Erstreckung des Verschlusskörpers einschließlich seiner gegebenenfalls vorhandenen Wand auf den Schaftabschnitt übertragen werden, sodass dieser Anschlagpunkt ohne Bruchgefährdung seines Schraubenteils sehr viel höhere Querkräfte aufnehmen kann.

In einem besonders bevorzugten Ausführungsbeispiel sind die Neigungswinkel der Lagerflächen von Oberteil und Unterteil gleich. Dann werden Wälzlagerkörper mit einer zylindrischen Mantelfläche verwendet. Bei diesem Konzept hat man sich von der, aufgrund der Neigung der nicht kugeligen Wälzkörper herrschenden Meinung, in einem solchen Fall müsse man zum Ausgleich der unterschiedlichen Wegstrecken bei einer Drehbewegung kegelstumpfförmige als Wälzlagerkörper einsetzen, verabschiedet. Zum Ausrichten des Anschlussorgans des Oberteils an die anliegende Zugrichtung ist eine Verschwenkbarkeit nur um maximal 180° erforderlich. An den Endabschnitten zylindrischer Wälzlagerkörper unterschiedliche Drehbewegungsstrecken führen daher nicht zu einem erhöhten Verschleiß. Gleiches gilt für die Ausrichtung des Oberteils gegenüber dem Unterteil bei anliegender axialer Zuglast. Diese Abkehr von der herrschenden Meinung bei Einsatz nicht kugeliger und bezüglich ihrer Drehachse geneigt angeordneter Wälzkörper wird als etwas Besonderes angesehen, zumal der Einsatz von zylindrischen Wälzlagerkörpern deutlich kostengünstiger als ein Einsatz von kegeligen Wälzlagerkörpern ist.

In einem anderen Ausführungsbeispiel ist vorgesehen, dass die Wälzlagerkörper einen tonnenförmigen Habitus aufweisen. Die Lagerflächen von Oberteil und Unterteil sind dann zumindest in ihrem mittleren Abschnitt an den Krümmungsradius dieser Wälzlagerkörper in Längserstreckung angepasst.

Eine freie Drehbarkeit des Oberteils gegenüber dem Unterteil dieses Anschlagpunktes kann bei einer Querlastbeanspruchung seines Anschlussorgans nochmals verbessert werden, wenn das Oberteil an seiner unteren, zu dem Verschlusskörper weisenden Seite eine weitere Lagerfläche und der Verschlusskörper eine hierzu komplementäre Lagerfläche aufweisen und zumindest bei einer solchen Querlastbeanspruchung das Oberteil über seine dann mit der Lagerfläche des Verschlusskörpers zusammenwirkende Lagerfläche an dieser abgestützt ist. Auch wenn diese Lagerung grundsätzlich als Gleitlager ausgeführt sein kann, ist in einem bevorzugten Ausführungsbeispiel vorgesehen, dass zwischen der unteren Lagerfläche des Oberteils und derjenigen des Verschlussteils Wälzkörper angeordnet sind. Hierbei kann es sich um Kugeln handeln. Im Belastungsfalle, was nur bei einer Querlastbeanspruchung des Anschlussorgans des Oberteils der Fall ist, werden diese lediglich auf Druck beansprucht. Dieses Lager ist bei Anliegen einer auf das Anschlussorgan wirkenden axialen Zugkraft unbeansprucht. Um eine möglichst einfache Montage des Anschlagpunktes zu erlauben, ist in einem Ausführungsbeispiel dieses Lagers vorgesehen, ein Nadellager zwischen die diesbezügliche Lagerfläche des Oberteils und diejenige des Unterteils einzuschalten. Ein solches Nadellager verfügt über eine Anzahl an typischerweise zylindrischen Lagerkörpern, eingefasst in einen Lagerkörperkäfig. Ein solches Bauteil lässt sich problemlos handhaben und montieren.

Die Lagerfläche des Verschlusskörpers ist gemäß einem Ausführungsbeispiel durch die Außenseite der Verriegelungswand in radialer Richtung zur Innenseite hin begrenzt. Außenseitig wird man vorzugsweise eine Labyrinthdichtung vorsehen, um einen Eintrag von Verschmutzungen in dieses Lager zu verhindern beziehungsweise zu minimieren. Erreicht werden kann dieses beispielsweise dadurch, dass das Oberteil über einen umlaufenden Ringfortsatz verfügt, der in radialer Richtung außenseitig zumindest einen Abschnitt des Verschlusskörpers in axialer Richtung unter Belastung eines gering dimensionierten Bewegungsspaltes übergreift.

Zum Verhindern eines Eintrages von Verschmutzungen in das Lager mit seinen bezüglich der Ausrichtung ihrer Drehachse geneigten Wälzlagerkörpern zwischen dem Oberteil und dem Unterteil und um dennoch die Drehbeweglichkeit des Oberteils gegenüber dem Unterteil nicht zu beeinträchtigen, ist gemäß einem Ausführungsbeispiel ein Verschlussring vorgesehen, durch den ein Abstandsspalt zwischen der radialen Außenseite des Kopfabschnittes des Unterteils und der Innenseite der zentralen Durchbrechung des Oberteils verschlossen wird. Ein solcher Verschlussring kann durch eine Rastung in der vorgesehenen Position fixiert sein. Wenn der Verschlussring drehmomentschlüssig an das Unterteil angeschlossen werden soll, können an diesem nach unten abragende Raststege angeformt sein, die in radial außenseitig in den Kopfabschnitt eingebrachte, nach Art von endseitig offenen Nuten ausgeführte Ausnehmungen eingreifen.

Nachfolgend ist die Erfindung unter Bezugnahme auf die beigefügten Figuren anhand eines Ausführungsbeispiels beschrieben. Es zeigen:
- **Fig.1:**: Ein Anschlagpunkt gemäß der Erfindung, dargestellt nach Art einer Explosionsdarstellung,
- **Fig. 2:**: der Anschlagpunkt der Figur 1 in seinem Zusammenbau,
- **Fig. 3:**: ein Längsschnitt durch den Anschlagpunkt der Figur 2 mit vergrößerten Detaildarstellungen,
- **Fig. 4:**: der Anschlagpunkt der vorstehenden Figuren, angeschlossen an einen schematisiert dargestellten, handzuhabenden Gegenstand, zum Darstellen unterschiedlicher auf seinen Anschlussorgan wirkender Zugbelastungen und
- **Fig. 5:**: eine zum Teil geschnittene perspektive Darstellung eines weiteren Anschlagpunktes gemäß der Erfindung.

Ein Anschlagpunkt 1 umfasst ein Oberteil 2 und ein Unterteil 3. Das Oberteil 2 verfügt als Anschlussorgan zum Anschließen eines Hebe-, Anschlag- oder Zurrmittels über einen Ösenbogen 4. Der Ösenbogen 4 ist angeformt an einen ringförmig ausgelegten Grundkörper 5. Der ringförmige Grundkörper 5 fasst eine als Durchbrechung aufgebaute Unterteilaufnahme 6 ein. Die die Innenseite des Grundkörpers 5 bildende und die Unterteilaufnahme 6 einfassende Wand umfasst einen oberen zylindrischen Wandabschnitt 7 und eine daran anschließende Lagerfläche 8. Die Lagerfläche 8 ist in Richtung von dem Ösenbogen 4 wegweisend konisch verjüngt. Die konische Verjüngung verläuft bei dem dargestellten Ausführungsbeispiel gerade.

Das Unterteil 3 verfügt über einen Kopfabschnitt 9, einen Schaftabschnitt 10 und über einen Gewindebolzen 11. Der Gewindebolzen 11 stellt bei dem Anschlagpunkt 1 sein Anschlussmittel zum Anschließen des Anschlagpunktes 1 an einen handzuhabenden Gegenstand dar.

Der Kopfabschnitt 9 verfügt unterseitig und somit in Richtung zu seinem Gewindebolzen 11 weisend über eine Lagerfläche 12. Diese ist mit demselben Winkel und in derselben Richtung verjüngt wie die Lagerfläche 8 des Oberteils 2. Die Lagerfläche 12 wird durch einen Mantelflächenabschnitt des gegenüber dem Schaftabschnitt 10 in radialer Richtung ausragenden Kopfabschnittes 9 bereitgestellt. In die obere Stirnseite 13 des prinzipiell als Schraubbolzen konzipierten Unterteils 3 ist eine als Sechskant ausgeführte Drehmitnahmekontur 14 eingebracht. In die in radialer Richtung weisende Außenseite 15 des Kopfabschnittes 9 sind mehrere mit gleichem Winkelabstand zueinander angeordnete Drehmitnahmeausnehmungen 16 eingebracht. Diese sind als in axialer Richtung endseitig offenen Nuten ausgeführt. Der Schaftabschnitt 10 trägt einen umlaufenden Verriegelungswulst 17.

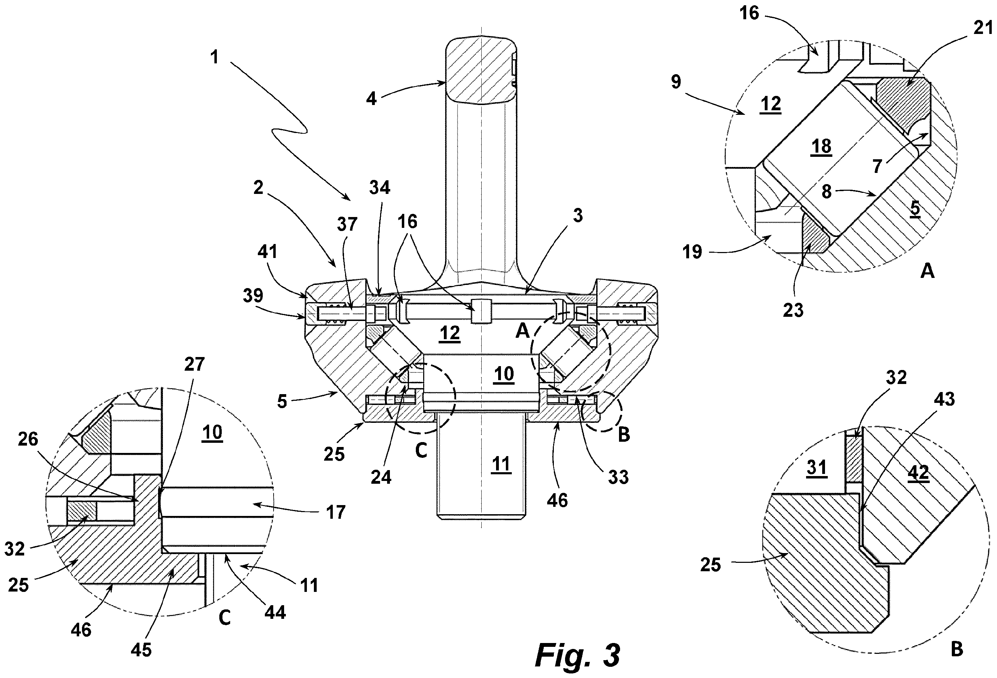

Zur Lagerung der Drehbeweglichkeit des Oberteils 2 gegenüber dem Unterteil 3 dienen zylindrische Wälzlagerkörper 18, die in einem Lagerkörperkäfig 19 angeordnet und geführt sind. Zu diesem Zweck verfügt der Lagerkörperkäfig 19 über eine der Anzahl der Wälzlagerkörper 18 entsprechende Anzahl an Wälzkörperaufnahmen 20. Der Lagerkörperkäfig 19 verfügt oberseitig über einen Positionierungsring 21, dessen radiale Außenseite 22 an dem Wandabschnitt 7 des Oberteils 2 abgestützt ist. Ein unterer Positionierungsring 23 ist bezüglich seiner Außenkontur geformt, um in den Übergang der Lagerfläche 8 in einen radialer Richtung nach innen gerichteten Vorsprung 24 (siehe Figur 3) einzugreifen.

Teil des Unterteils 3 ist ein nach Art einer Scheibe ausgeführter Verschlusskörper 25, der an dem Schaftabschnitt 10 des Unterteils 3 in axialer Richtung formschlüssig angeschlossen ist. Zu diesem Zweck verfügt der Verschlusskörper 25 über eine umlaufende Verriegelungswand 26 an deren zu dem Schaftabschnitt 10 weisenden Innenseite an komplementärer Position zu dem Verriegelungswulst 17 eine Verriegelungsrille 27 eingebracht ist. Die Verriegelungswand 26 erstreckt sich ausgehend von dem scheibenförmigen Grundkörper des Verschlusskörpers 25 in axialer Richtung in Richtung zu dem Kopfabschnitt 9 des Unterteils 3. Die in radiale Richtung nach außen weisende Außenseite 28 der Verriegelungswand 26 begrenzt innenseitig eine Lagerfläche 29. Auf dieser ist ein Nadellager 30 positioniert. Das Nadellager 30 ist nur schematisiert dargestellt und verfügt in einer tatsächlichen Ausgestaltung mehr als nur die vier dargestellten Wälzkörper 31. Die Wälzkörper 31 sind in einem Käfig 32 gehalten. Das Nadellager 30 ist insgesamt problemlos handhabbar und montierbar. Die Unterseite des Oberteils 2 verfügt über eine zu dem Verschlusskörper 25 weisende Lagerfläche, die sodann die zu der Lagerfläche 29 komplementäre Lagerfläche darstellt. Hierzu wird auf Figur 3 verwiesen, in der diese unterseitige Lagerfläche des Oberteils mit dem Bezugszeichen 33 kenntlich gemacht ist.

Ein Verschlussring 34 dient zum Verschließen eines Ringspaltes zwischen der Außenseite 15 des Kopfabschnittes 9 des Unterteils 3 und dem zylindrischen Wandabschnitt 7 des Oberteils 2. Zum Zwecke seiner Montage sind an die Unterseite des Verschlussringes 34 paarweise miteinander angeordnete Raststege 35 angeformt, deren Rastköpfe voneinander wegweisen.

Die Raststege 35 eines Raststegpaares durchgreifen in axialer Richtung jeweils eine Drehmitnahmeausnehmung 16, wobei deren Rastköpfe eine solche Drehmitnahmeausnehmung 16 zum Rastfixieren des Verschlussringes 34 an dem Kopfabschnitt 9 des Unterteils 3 unterseitig hintergreifen. Hierdurch ist der Verschlussring 34 drehmomentschlüssig mit dem Unterteil 3 verbunden. Der Verschlussring 34 trägt an seiner Oberseite Kennzeichnungspfeile, durch die einem Benutzer die Lage der Drehmitnahmeausnehmungen 16 angezeigt wird.

Die Drehmitnahmeausnehmungen 16 des Unterteils 3 dienen dem Zweck, damit der Anschlagpunkt 1 mittels seines Oberteils 2 werkzeuglos handfest an einen handzuhabenden Gegenstand angeschlossen werden kann. Um eine solche Drehmitnahme zum Anschließen des Anschlagpunktes 1 an einen handzuhabenden Gegenstand oder zum Lösen desselben von diesem zu erzielen, ist das Oberteil 2 im Bereich seines ringförmigen Grundkörpers 5 mit zwei unabhängig voneinander betätigbaren Kupplungsmitteln 36 ausgerüstet. Jedes Kupplungsmittel 36 umfasst einen Kupplungsbolzen 37, eine Druckfeder 38 als Rückstellelement und eine Betätigungskappe 39, deren Stirnfläche bei einer Betätigung eines Kupplungsmittels 36 zum Ineingriffstellen der Spitze des Kupplungsbolzen 37 in eine Drehmitnahmeausnehmung 16 gegen die Kraft der Druckfeder 38 wirkt. Eine Rückstellung eines betätigten Kupplungsmittels 36 erfolgt somit durch die Druckfeder 38. Geführt sind die Kupplungsbolzen 37 jeweils in einer radial ausgerichteten Führungsbohrung 40 des Oberteils 2. Die Betätigungskappe 39 befindet sich in einer Griffmulde 41, die bei dem dargestellten Ausführungsbeispiel als trichterförmige Vergrößerung der eigentlichen Führungsbohrungen 40 ausgeführt ist. Eine solche Griffmulde 41 ist zweckmäßig, damit kein Betätigungselement über die äußere Mantelfläche des Grundkörpers 5 des Unterteils 3 vorsteht.

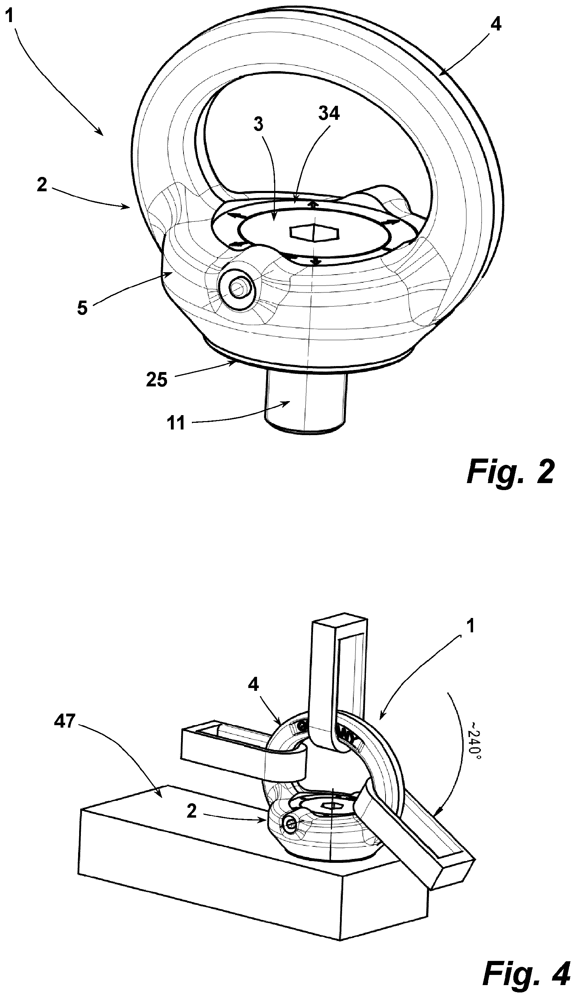

Der Anschlagpunkt 1 ist in Figur 2 in seinem Zusammenbau gezeigt und verdeutlicht seine kompakte Ausführung.

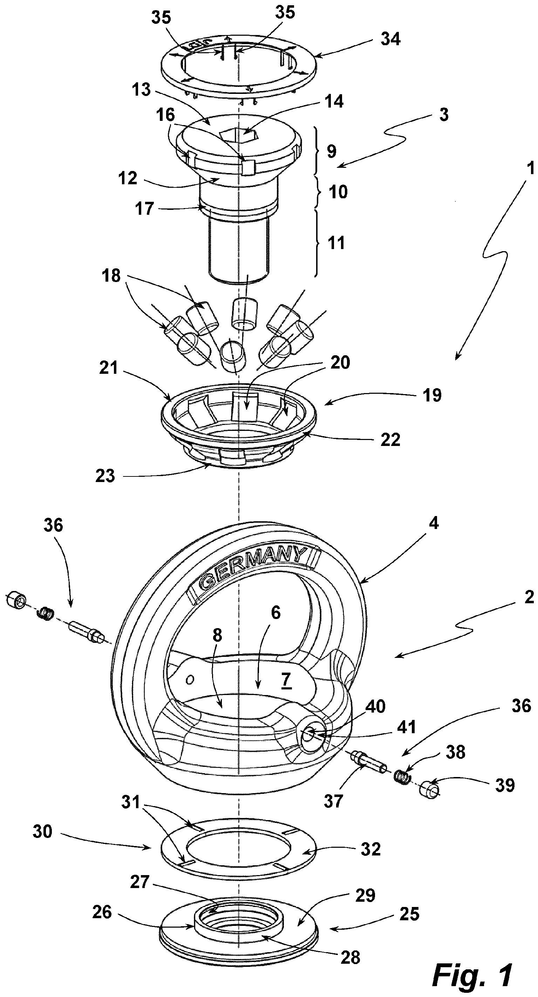

Die Lagerung des gegenüber dem Unterteil 3 drehbaren Oberteils 2 ist in der Schnittdarstellung der Figur 3 als Zusammenbau der zu der Figur 1 beschriebenen Einzelelemente ersichtlich. Details sind in Form von vergrößerten Detaildarstellungen hervorgehoben. Die Detaildarstellung A zeigt die in ihrem Lagerkörperkäfig 19 zwischen den beiden Positionierungsringen 21, 23 angeordneten zylindrischen Wälzlagerkörper 18. Diese stützen sich einerseits an der Lagerfläche 12 als Teil des Kopfabschnittes 9 des Unterteils 3 ab. Die komplementäre Lagerfläche des Oberteils 2 wird durch die Lagerfläche 8 gebildet. Beide Lagerflächen 8, 12 sind mit 45 Grad gegenüber der Drehachse des Oberteils 2 gegenüber dem Unterteil 3 geneigt. Diese Lagerung von Oberteil 2 gegenüber Unterteil 3 erlaubt infolge des Einsatzes nicht kugeliger Wälzkörper, und zwar durch Einsatz von zylindrischen Wälzlagerkörpern 18 in dem dargestellten Ausführungsbeispiel eine besonders hohe Kraftübertragung. Infolge der beschriebenen Neigung der Lagerflächen 8, 12 und der parallel zu diesen ausgerichteten Längsachse der Wälzlagerkörper 18 ist eine Drehbeweglichkeit des Oberteils 2 gegenüber dem Unterteil 3 sowohl bei einer Zugbeanspruchung in axialer als auch in radialer Richtung gleichsam gegeben. Sollte dieses Lager Spiel aufweisen oder im Zuge eines Verschleißes Spiel erhalten, ist dieses für die bestimmungsgemäße Verwendung des Anschlagpunktes 1 ohne Bedeutung. Schließlich sind die Wälzlagerkörper 18 in dem Wälzkörperkäfig 19 gehalten und geführt, sodass ihre Ausrichtung erhalten bleibt, auch wenn Lagerspiel vorhanden ist.

Das zwischen der Lagerfläche 29 des Verschlusskörpers 25 und der Lagerfläche 33 des Oberteils 2 eingesetzte Nadellager 30 dient zur drehbeweglichen Abstützung des Oberteils 2 gegenüber dem Verschlusskörper 25 als Teil des Unterteils 3 vor allem bei auf das Anschlussorgan des Oberteils 2 wirkenden Querlastbeanspruchungen. Ein Verkippen des Oberteils 2 gegenüber dem Unterteil 3, was bei einer Querlastbeanspruchung des Anschlussorgans des Anschlagpunktes 1, wenn Spiel in dem Lager ist, möglich ist, wird auf diese Weise wirksam abgefangen und somit eine dauerhafte Drehbeweglichkeit des Oberteils 2 gegenüber dem Unterteil 3 auch bei derartigen Belastungen gewährleistet. Der Grundkörper 15 des Unterteils 3 trägt einen nach unten abragenden Ringfortsatz 42. Dieser ist in der Detailvergrößerung B verdeutlicht. Dieser Ringfortsatz 42 fasst den oberen Abschnitt des scheibenartigen Verschlusskörpers 25 radial außenseitig ein und bildet mit dieser Außenseite unter Belassung eines Bewegungsspaltes eine Labyrinthdichtung 43. Hierdurch ist ein Eindringen von Verunreinigungen in das Nadellager 30 oder auch in das durch die Wälzlagerkörper 18 bereitgestellte Lager verhindert. Zu diesem Zweck wird der untere Abschluss des Ringfortsatzes 42 von einem Abschnitt des Verschlusskörpers 25 untergriffen.

Der in axialer Richtung wirkende Formschluss zwischen dem Verschlusskörper 25 und dem Schaftabschnitt 10 des Unterteils 3 ist in der Detaildarstellung C gezeigt. Der außenseitig an dem Schaftabschnitt 10 angeformte Verriegelungswulst 27 taucht in die Verriegelungsrille 27 der Verriegelungswand 26 ein. Der Schaftabschnitt 10 bildet im Übergang zu seinem Gewindebolzen 11 einen Anschlagabsatz 44 aus. Dieser ist von einem Anschlagfortsatz 45 des Verschlusskörpers 25 untergriffen. Damit ist die Montageposition in axialer Richtung des Verschlusskörpers 25 an dem Schaftabschnitt 10 des Unterteils 3 definiert. Zugleich ist hierdurch der Auslauf des Gewindes des Gewindebolzens 11 in Richtung zu dem Anschlagabsatz 44 gegenüber Querlastbeanspruchung und einer damit einhergehenden Kerbwirkung geschützt. In axialer Richtung ist die Unterseite des Verschlusskörpers 25 von dem Anschlagabsatz 44, an dem das Gewinde des Gewindebolzens 11 ausläuft, beabstandet.

Die Schnittdarstellung der Figur 3 des Anschlagpunktes 1 verdeutlicht, dass die Unterseite des Verschlusskörpers 25 eine Anschlagfläche 46 bildet, mit der der Anschlagpunkt 1 mit der Oberfläche eines handzuhabenden Gegenstandes verspannt wird.

Zum Anschließen des Anschlagpunktes 1 an einen handzuhabenden Gegenstand 47 - in Figur 4 ist dieser schematisiert als Quader dargestellt - wird, wenn nur ein handfestes Verspannen erforderlich ist, durch Betätigen eines der beiden oder auch beider Kupplungsmittel 36, sodass die Spitze zumindest eines Kupplungsbolzens 37 in eine Drehmitnahmeausnehmung 16 des Unterteils 3 eingreift, wodurch das Oberteil 2 drehmomentschlüssig mit dem Unterteil 3 gekoppelt ist, und anschließendem Drehen des Oberteils 2 herbeigeführt. Ist der Anschlagpunkt 1 an den handzuhabenden Gegenstand 47 angeschlossen, springt der Kupplungsbolzen 37 beim Loslassen der Betätigungskappe 39 infolge der in der als Schraubendruckfeder 38 ausgeführten Rückstellfeder gespeicherten Energie in seine Ausgangsstellung zurück, sodass dann das Oberteil 2 wieder frei gegenüber dem Unterteil 3 drehbar ist. Ist ein Verspannen mit höheren Kräften gewünscht, kann die in die obere Stirnseite 13 des Kopfabschnittes 9 eingebrachte Drehmitnahmekontur 14 genutzt und das Unterteil 3 mittels eines Werkzeuges mit dem handzuhabenden Gegenstand 47 verspannt werden.

Figur 4 zeigt unterschiedliche Zugbelastungsstellungen, die auf das Oberteil 2 beziehungsweise sein Anschlussorgan 4 einwirken können, wobei dennoch eine Drehbarkeit des Oberteils 2 gegenüber dem Unterteil 3 vorhanden ist. In den in Figur 4 gezeigten Stellungen ist der Ösenbogen 4 bereits in der jeweiligen Zugrichtung ausgerichtet. Sollte der Ösenbogen 4 hingegen vor Anlegen einer Zugkraft eine andere Raumlage aufweisen, richtet sich dieser bei Anlegen der Zugkraft auch bei höheren Zugkräften automatisch in die in Figur 4 gezeigte Orientierung aus. Eine Belastung des Anschlussorgans des Oberteils 2 ist bei diesem Anschlagpunkt auch in Querrichtungen möglich, die gegenüber einer anliegenden axialen Zugrichtung um mehr als 90 Grad geneigt sind. Die Gewährleistung einer freien Drehbarkeit von Oberteil 2 gegenüber Unterteil 3 bei derartigen Zugbeanspruchungen ist infolge des zwischen dem Oberteil 2 und dem Verschlusskörper 25 des Unterteils 3 eingeschalteten Nadellagers 30 gegeben. Infolge der beschriebenen Lagerung des Oberteils 2 gegenüber dem Unterteil 3 bleibt die Drehbeweglichkeit auch bei angehobenem Gegenstand 47 erhalten. Dieses ist vor allem dann gewünscht, wenn ein handzuhabender Gegenstand von einem ersten Hebemittel an ein zweites übergeben werden soll, was regelmäßig zu einem Verschwenken des Oberteils 2 gegenüber dem Unterteil 3 führt. Aufgrund der beschriebenen Drehbeweglichkeit des Oberteils 2 gegenüber dem Unterteil 3 beeinträchtigt dieses die Verspannung des Unterteils 3 mit dem handzuhabenden Gegenstand 47 nicht.

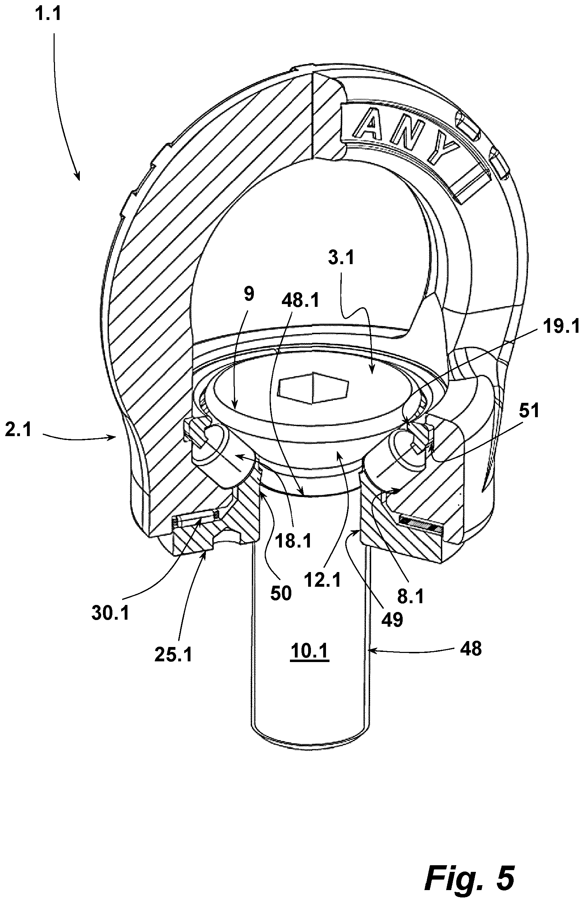

Figur 5 zeigt einen weiteren erfindungsgemäßen Anschlagpunkt 1.1. Die vorstehenden Ausführungen zu dem Anschlagpunkt 1 gelten gleicherma-ßen für den Anschlagpunkt 1.1, soweit sich aus den nachstehenden Ausführungen nichts anderes ergibt. Gleiche Bauteile des Anschlagpunktes 1.1 sind mit denselben Bezugszeichen wie bei dem Anschlagpunkt 1, jedoch ergänzt um den Suffix ".1" kenntlich gemacht.

Bei dem Anschlagpunkt 1.1 wird sein auch als Schraubenteil anzusprechendes Unterteil 3.1 als Teil der Funktionseinheit "Unterteil" durch eine Normschraube bereitgestellt. Ihr Kopfabschnitt 9.1 verfügt über eine in einem Winkel von 45 Grad in Richtung zu dem Schaftabschnitt 10.1 geneigte Konusfläche, die die Lagerfläche 12.1 an der Unterseite des Kopfabschnittes 9.1 darstellt. Der Schaftabschnitt 10.1 verfügt über ein Außengewinde 48, welches in axialer Richtung kurz vor die Lagerfläche 12.1 endet. Der Verschlusskörper 25.1 trägt an seiner den Schaftabschnitt 10.1 einfassenden Innenseite ein komplementäres Innengewinde 49. Somit kann der Verschlusskörper 25.1 auf das Gewinde 48 des Schaftes 10.1 aufgeschraubt werden. Auch der Verschlusskörper 25.1 verfügt über die an den scheibenartigen Grundkörper angeformte ringförmige umlaufende Wand 50. Das Innengewinde 49 erstreckt sich auch in diese Wand 50. Die axiale Erstreckung der Wand 50 ist so ausgelegt, dass die zu dem Kopfabschnitt 9.1 weisende Stirnfläche eine Anschlagfläche bildet, die gegen die Lagerfläche 12.1 wirkt. Somit wird der Verschlusskörper 25.1 mit der durch den oberen Abschluss der Wand 50 bereitgestellten Anschlagfläche mit der Lagerfläche 12.1 verspannt. Eine zusätzliche Sicherung gegen ein Lösen des Verschlusskörpers 25.1 kann dadurch bewirkt werden, dass der Verschlusskörper 25.1 bis auf die kurz vor der Lagerfläche 12.1 auslaufenden Gewindegänge des Außengewindes 48 aufgeschraubt wird. Insofern wird der Verschlusskörper 25.1 weiter auf das Außengewinde 48 des Schaftes 10.1 aufgeschraubt als durch sein eigenes Gewinde möglich. Dieses stellt eine besondere Sicherung gegen ein unbeabsichtigtes Lösen dar. In Figur 5 ist der Gewindeauslauf des Außengewindes 48 des Schaftabschnittes 10.1 mit dem Bezugszeichen 48.1 kenntlich gemacht. Deutlich erkennbar ist in dieser Figur, dass die Wand 50 mit ihrem Innengewinde 49 über den Gewindeauslauf 48.1 hinaus auf das Außengewinde 48 des Schaftabschnittes 10.1 aufgeschraubt ist.

Grundsätzlich wird es jedoch als ausreichend angesehen, wenn der Verschlusskörper 25.1 mit seiner durch die Wand bereitgestellten freien Stirnfläche gegenüber der Lagerfläche 12.1 verspannt ist. Möglich ist auch eine Ausgestaltung, bei der die Wand nicht an der Lagerfläche 12.1 des Unterteils 3.1 abgestützt ist und die Position des Verschlusskörpers 25.1 auf dem Außengewinde 48 des Schaftes 10.1 durch in die Gewindegänge eingebrachten Kleber fixiert ist.

Deutlich erkennbar ist in der zum Teil geschnittenen Darstellung des Anschlagpunktes 1.1 auch bei diesem Ausführungsbeispiel das als Nadellager 30.1 ausgeführte Lager zwischen der Unterseite des Oberteils 2.1 und der Oberseite des Verschlusskörpers 25.1.

Die zylindrischen Wälzlagerkörper 18.1 befinden sich auch bei diesem Ausführungsbeispiel in einem Wälzkörperkäfig 19.1. Bei diesem Ausführungsbeispiel ist der Wälzkörperkäfig 19.1 nach Art eines Sprengringes ausgeführt und sitzt in einer in das Oberteil 2.1 eingebrachten umlaufenden Nut 51. Diese Nut 51 hat eine rechteckförmige Querschnittsfläche. Durch entsprechende Auslegung des oberen, zum Oberteil 2.1 weisenden Abschlusses des Wälzkörperkäfiges 19.1 kann durch diesen zugleich der Spalt zwischen der radialen Außenseite des Kopfabschnittes 9.1 des Unterteils 3.1 und der Innenseite des Oberteils 2.1, durch die die zentrale Durchbrechung des Oberteils 3.1 eingefasst ist, bereitgestellt sein.

Vorteilhaft bei dem Anschlagpunkt 1.1 ist, dass das als Schraubenteil ausgeführte Unterteil 3.1, welches zusammen mit dem Verschlusskörper 25.1 die Funktionseinheit "Unterteil" bildet, durch eine Normschraube realisiert ist, was sich kostenreduzierend auf die Herstellkosten des Anschlagpunktes 1.1 auswirkt. Zudem ist ein Lösen des Verschlusskörpers 25.1 von dem Unterteil 3.1, insbesondere auch ein mehrmaliges Lösen, möglich.

Der Anschlagpunkt 1.1 kann auch mit Kupplungsmitteln, wie diese zu dem Ausführungsbeispiel der Figuren 1 bis 4 beschrieben sind ausgerüstet sein, um eine Drehmitnahme des Oberteils 2.1 zu dem Unterteil 3.1 zu bewirken. Es ist dann lediglich erforderlich, in die radial äußere Mantelfläche des Kopfabschnittes 9.1 an entsprechenden Stellen Drehmitnahmeausnehmungen einzubringen.

Sollte bei dem Anschlagpunkt die Drehbarkeit seines Oberteilt gegenüber dem Unterteil weniger im Vordergrund stehen als die Möglichkeit einer Aufnahme hoher Querkräfte, kann der zu Figur 5 beschriebene Anschlagpunkt auch ohne Wälzlagerkörper zwischen den beiden gleichsinnig und mit gleichem Winkel geneigten Lagerflächen des Kopfabschnittes sowie des Oberteils ausgeführt sein. Bei einer solchen Auslegung wird man zweckmäßigerweise auch das zu dem Ausführungsbeispiel der Figur 5 eingesetzte Nadellager nicht notwendigerweise verwenden. Die Lagerung des Oberteils gegenüber dem Unterteil erfolgt dann über die einander kontaktierenden Lagerflächen als Gleitlager. Die besonders hohe Querkraftaufnahme auch eines solchen Anschlagpunktes wird daran festgemacht, dass der Verschlusskörper mit seiner umlaufenden Wand sich über einen Gewindeabschnitt des als Schraubenteil ausgebildeten Unterteils erstreckt, typischerweise, wie zu dem Ausführungsbeispiel der Figur 5 beschrieben, über den Gewindeauslauf hinweg, und der Übergang von dem zylindrischen Schaftabschnitt in die geneigt ausgeführte Lagerfläche des Kopfabschnittes. Da die Neigung dieser Lagerfläche einen Winkel von 45° gegenüber der Längsachse des Schraubenteils aufweist, beträgt der Winkel zwischen der Lagerfläche und der Mantelfläche des Schaftabschnittes 135°. Durch diese Maßnahmen - einzeln oder auch miteinander kombiniert - sind vor allem bei auf das Anschlussorgan einwirkenden Querlastbeanspruchungen Kerbwirkungseinflüsse auf ein Minimum reduziert, verglichen mit den Anschlagpunkten des eingangs gewürdigten Standes der Technik.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungsmöglichkeiten, ohne dass diese im Rahmen dieser Ausführungen im Einzelnen dargelegt werden müssten.

**Bezugszeichenliste**

| | | | |
|---|---|---|---|
| 1, 1.1 | Anschlagpunkt | 31 | Wälzkörper |
| 2, 2.1 | Oberteil | 32 | Käfig |
| 3, 3.1 | Unterteil | 33 | Lagerfläche |
| 4 | Ösenbogen | 34 | Verschlussring |
| 5 | Grundkörper | 35 | Raststeg |
| 6 | Unterteilaufnahme | 36 | Kupplungsmittel |
| 7 | Wandabschnitt | 37 | Kupplungsbolzen |
| 8 | Lagerfläche | 38 | Druckfeder |
| 9 | Kopfabschnitt | 39 | Betätigungskappe |
| 10, 10.1 | Schaftabschnitt | 40 | Führungsbohrung |
| 11 | Gewindebolzen | 41 | Griffmulde |
| 12, 12.1 | Lagerfläche | 42 | Ringfortsatz |
| 13 | Stirnseite | 43 | Labyrinthdichtung |
| 14 | Drehmitnahmekontur | 44 | Anschlagabsatz |
| 15 | Außenseite | 45 | Anschlagfortsatz |
| 16 | Drehmitnahmeausnehmung | 46 | Anschlagfläche |
| 17 | Verriegelungswulst | 47 | handzuhabender Gegenstand |
| 18, 18.1 | Wälzlagerkörper | 48 | Außengewinde |
| 19, 19.1 | Lagerkörperkäfig | 48.1 | Gewindeauslauf |
| 20 | Wälzkörperaufnahme | 49 | Innengewinde |
| 21 | Positionierungsring | 50 | Wand |
| 22 | Außenseite | 51 | Nut |
| 23 | Positionierungsring | | |
| 24 | Vorsprung | | |
| 25 | Verschlusskörper | | |
| 26 | Verriegelungswand | | |
| 27 | Verriegelungsrille | | |
| 28 | Außenseite | | |
| 29 | Lagerfläche | | |
| 30, 30.1 | Nadellager | | |

## Patentansprüche

1. Anschlagpunkt mit einem ein Anschlussmittel zum Anschließen des Anschlagpunktes (1, 1.1) an einen damit handzuhabenden Gegenstand (47) aufweisendes Unterteil (3, 3.1) und mit einem gegenüber dem Unterteil (3, 3.1) drehbaren und daran angeschlossenen Oberteil (2, 2.1) mit einem Anschlussorgan (4) zum Anschließen eines Hebe-, Anschlag- oder Zurrmittels, wobei zur drehbaren Lagerung des Oberteils (2) gegenüber dem Unterteil (3, 3.1) das Oberteil (2, 2.1) eine obere, sich in axialer Richtung konisch verjüngende Lagerfläche (12. 12.1), das Unterteil (3, 3.1) eine untere, sich in derselben Richtung konisch verjüngende Lagerfläche (8) aufweisen und wobei zwischen den beiden Lagerflächen (8, 12; 8.1, 12.1) Wälzlagerkörper (18) mit einer durch eine Drehachse und eine um die Drehachse rotationssymmetrische Mantelfläche definierten Form angeordnet sind, deren Drehachsen in Richtung der konischen Verjüngung der Lagerflächen (8, 12; 8.1, 12.1) ausgerichtet sind, **dadurch gekennzeichnet, dass** die Wälzlagerkörper (18, 18.1) mit ihren Drehachsen gegenüber der Drehachse des Oberteils (2, 2.1) einen Winkel von 30° oder mehr und nicht mehr als 60° einschließen, das Unterteil (3, 3.1) einen Kopfabschnitt (9, 9.1) und einen daran angeformten, gegenüber dem Kopfabschnitt (9, 9.1) mit einem geringen Durchmesser ausgelegten Schaftabschnitt (10, 10.1) aufweist, wobei die Lagerfläche (12, 12.1) des Unterteils (3, 3.1) durch einen Mantelflächenabschnitt des Kopfabschnittes (9, 9.1) bereitgestellt ist, welches Unterteil (3, 3.1) das Oberteil (2, 2.1) durchgreift, und dass zum Zusammenhalt von Unterteil (3, 3.1) und Oberteil (2, 2.1) ein an den Schaftabschnitt (10, 10.1) des Unterteils (3, 3.1) angeschlossener, das Oberteil (2, 2.1) in radialer Richtung zumindest abschnittsweise untergreifender Verschlusskörper (25, 25.1) vorgesehen ist.

2. Anschlagpunkt nach Anspruch 1, **dadurch gekennzeichnet, dass** der Verschlusskörper (25, 25.1) nach Art einer Scheibe ausgeführt ist, deren von dem Unterteil (3, 3.1) wegweisende Oberfläche eine Anschlagfläche (46) zum Verspannen des Anschlagpunktes (1, 1.1) mit dem handzuhabenden Gegenstand (47) bildet.

3. Anschlagpunkt nach einem der Ansprüche 1 oder 2, **dadurch gekennzeichnet, dass** der Schaftabschnitt (10) des Unterteils (3) einen von seinem Kopfabschnitt (9) wegweisenden Anschlagabsatz (44) und der Verschlusskörper (25) einen komplementär dazu ausgeführten Gegenanschlag (45) aufweisen.

4. Anschlagpunkt nach einem der Ansprüche 1 oder 2, **dadurch gekennzeichnet, dass** Teil des Verschlusskörpers (25, 25.1) eine den Schaftabschnitt (10, 10.1) des Unterteils (3, 3.1) einfassende, sich in axialer Richtung des Unterteils (3, 3.1) erstreckende, das Oberteil (2, 2.1) nicht untergreifende Wand (26, 50) ist, ausgerüstet mit Mitteln zum Anschließen des Verschlusskörpers (25, 25.1) an den Schaftabschnitt (10, 10.1) des Unterteils (3, 3.1).

5. Anschlagpunkt nach Anspruch 4, **dadurch gekennzeichnet, dass** die an den Verschlusskörper (25) angeformte Wand als Verriegelungswand (26) mit einer zu dem Schaftabschnitt (10) weisenden Innenseite und einer in entgegengesetzte Richtung weisenden Außenseite ausgeführt ist und dass entweder die Verriegelungswand (26) an ihrer Innenseite oder der von der Verriegelungswand eingefasste Schaftabschnitt (10) des Unterteils (3) eine darin eingebrachte Verriegelungsrille (27) und komplementär dazu der von der Verriegelungswand (26) eingefasste Schaftabschnitt (10) oder die Verriegelungswand (26) an ihrer Innenseite an komplementärer Stelle einen in die Verriegelungsrille (27) eingreifenden Verriegelungswulst (17) trägt.

6. Anschlagpunkt nach Anspruch 4, **dadurch gekennzeichnet, dass** die zu dem Kopfabschnitt (9.1) des Unterteils (3.1) weisende Stirnfläche der Wand (50) als Anschlag ausgeführt ist, der gegen die Lagerfläche (2.1) des Unterteils (3.1) wirkt.

7. Anschlagpunkt nach Anspruch 4 oder 6, **dadurch gekennzeichnet, dass** der Schaftabschnitt (10.1) als Gewindeschaftabschnitt mit einem Außengewinde (48) ausgeführt ist und der Verschlusskörper (25.1) an seiner den Schaftabschnitt (10.1) einfassenden Innenseite mit einem komplementären Innengewinde (49) ausgestattet ist.

8. Anschlagpunkt nach einem der Ansprüche 1 bis 7, **dadurch gekennzeichnet, dass** die Wälzlagerkörper (18, 18.1) einen Winkel von 45° oder etwa 45° einschließen.

9. Anschlagpunkt nach einem der Ansprüche 1 bis 8, **dadurch gekennzeichnet, dass** die Wälzlagerkörper (18, 18.1) in einem Lagerkörperkäfig (19, 19.1) angeordnet und geführt sind.

10. Anschlagpunkt nach einem der Ansprüche 1 bis 9, **dadurch gekennzeichnet, dass** der Neigungswinkel der beiden Lagerflächen (8, 12; 8.1, 12.1) gleich ist und die Wälzlagerkörper (18, 18.1) eine zylindrische Mantelfläche aufweisen.

11. Anschlagpunkt nach einem der Ansprüche 1 bis 10, **dadurch gekennzeichnet, dass** das Oberteil (2, 2.1) an seiner zu dem Verschlusskörper (25, 25.1) weisenden Unterseite eine weitere Lagerfläche (33) und der Verschlusskörper (25, 25.1) an seiner zu dem Oberteil (2, 2.1) weisenden Seite eine mit der weiteren Lagerfläche (33) zusammenwirkende Lagerfläche (29) aufweisen, sodass zumindest bei einer Querlastbeanspruchung des Anschlussorgans (4) des Oberteils (2, 2.1) dieses mit seiner unteren Lagerfläche (33) an derjenigen des Verschlusskörpers (25, 25.1) abgestützt ist.

12. Anschlagpunkt nach Anspruch 11 in seinen Rückbezug auf einen der Ansprüche 4 bis 6, **dadurch gekennzeichnet, dass** die Lagerfläche (29) des Verschlusskörpers (25, 25.1) in radialer Richtung innenseitig durch die Außenseite der Wand (26, 50) begrenzt ist.

13. Anschlagpunkt nach Anspruch 11 oder 12, **dadurch gekennzeichnet, dass** zwischen der unterseitigen Lagerfläche (33) des Oberteils (2, 2.1) und derjenigen des Verschlusskörpers (25, 25.1) Wälzkörper (31) angeordnet sind.

14. Anschlagpunkt nach Anspruch 13, **dadurch gekennzeichnet, dass** die Wälzkörperlagerung durch ein Nadellager (30, 30.1) realisiert ist.

15. Anschlagpunkt nach einem der Ansprüche 1 bis 14, **dadurch gekennzeichnet, dass** das Oberteil (2) über einen den Verschlusskörper (25) radial außenseitig in axialer Richtung zumindest über einen Abschnitt einfassenden Ringfortsatz (34) verfügt und dieser mit dem Verschlusskörper (25) eine Labyrinthdichtung (43) bildet.

16. Anschlagpunkt nach einem der Ansprüche 1 bis 15, **dadurch gekennzeichnet, dass** das Anschlussmittel zum Anschließen des Anschlagpunktes (1) an einen damit handzuhabenden Gegenstand (47) ein Gewindebolzen (11) ist.

## Claims

1. An anchor point with a lower part (3, 3.1) having a connecting means for connecting the anchor point (1, 1.1) to an object (47) to be handled therewith, and with an upper part (2, 2.1) which is rotatable relative to the lower part (3, 3.1) and connected thereto and has a connecting element (4) for connecting a lifting, anchoring or lashing means, wherein for the rotatable mounting of the upper part (2) relative to the lower part (3, 3.1), the upper part (2, 2.1) has an upper bearing surface (12, 12.1) tapering conically in the axial direction, the lower part (3, 3.1) has a lower bearing surface (8) tapering conically in the same direction, and wherein between the two bearing surfaces (8, 12; 8.1, 12.1) rolling bearing bodies (18) are arranged, which have a shape defined by a rotation axis and a rotationally symmetrical lateral surface about the rotation axis, the axes of rotation of which are aligned in the direction of the conical taper of the bearing surfaces (8, 12; 8.1, 12.1), **characterized in that** the rolling bearing bodies (18, 18.1) with their axes of rotation enclose an angle of 30° or more and not more than 60° with respect to the axis of rotation of the upper part (2, 2.1), the lower part (3, 3.1) has a head section (9, 9.1) and a shaft section (10, 10.1) formed thereon and designed with a small diameter compared to the head section (9, 9.1), wherein the bearing surface (12, 12.1) of the lower part (3, 3.1) is provided by a lateral surface section of the head section (9, 9.1), which lower part (3, 3.1) passes through the upper part (2, 2.1), and **in that**, for holding together of the lower part (3, 3.1) and the upper part (2, 2.1), a closure body (25, 25.1) is provided which is connected to the shaft section (10, 10.1) of the lower part (3, 3.1) and which engages under the upper part (2, 2.1) in the radial direction at least in sections.

2. The anchor point according to claim 1, **characterized in that** the closure body (25, 25.1) is designed in the manner of a disc, the surface of which facing away from the lower part (3, 3.1) forms an anchoring surface (46) for bracing the anchor point (1, 1.1) to the object to be handled (47).

3. The anchor point according to any one of claims 1 or 2, **characterized in that** the shaft section (10) of the lower part (3) has an anchor shoulder (44) pointing away from its head section (9) and the closure body (25) has a counter-anchor (45) designed complementarily thereto.

4. The anchor point according to any one of claims 1 or 2, **characterized in that** part of the closure body (25, 25.1) is a wall (26, 50) which encloses the shaft section (10, 10.1) of the lower part (3, 3.1), extends in the axial direction of the lower part (3, 3.1), does not engage under the upper part (2, 2.1), and is equipped with means for connecting the closure body (25, 25.1) to the shaft section (10, 10.1) of the lower part (3, 3.1).

5. The anchor point according to claim 4, **characterized in that** the wall formed on the closure body (25) is designed as a locking wall (26) with an inner side facing the shaft section (10) and an outer side facing in the opposite direction, and **in that** either the locking wall (26) on its inner side or the shaft section (10) of the lower part (3) enclosed by the locking wall has a locking groove (27) introduced therein and, complementarily thereto, the shaft section (10) enclosed by the locking wall (26) or the locking wall (26) has on its inner side at a complementary location a locking bead (17) engaging in the locking groove (27).

6. The anchor point according to claim 4, **characterized in that** the end face of the wall (50) facing the head section (9.1) of the lower part (3.1) is designed as a stop which acts against the bearing surface (2.1) of the lower part (3.1).

7. The anchor point according to claim 4 or 6, **characterized in that** the shaft section (10.1) is designed as a threaded shaft section with an external thread (48) and the closure body (25.1) is equipped with a complementary internal thread (49) on its inner side enclosing the shaft section (10.1).

8. The anchor point according to any one of claims 1 to 7, **characterized in that** the rolling bearing bodies (18, 18.1) enclose an angle of 45° or approximately 45°.

9. The anchor point according to any one of claims 1 to 8, **characterized in that** the rolling bearing bodies (18, 18.1) are arranged and guided in a bearing body cage (19, 19.1).

10. The anchor point according to any one of claims 1 to 9, **characterized in that** the angle of inclination of the two bearing surfaces (8, 12; 8.1, 12.1) is the same and the rolling bearing bodies (18, 18.1) have a cylindrical lateral surface.

11. The anchor point according to any one of claims 1 to 10, **characterized in that** the upper part (2, 2.1) has a further bearing surface (33) on its underside facing the closure body (25, 25.1) and the closure body (25, 25.1) has a bearing surface (29) cooperating with the further bearing surface (33) on its side facing the upper part (2, 2.1), so that at least when the connecting element (4) of the upper part (2, 2.1) is subjected to a transverse load, the latter is supported with its lower bearing surface (33) on that of the closure body (25, 25.1).

12. The anchor point according to claim 11 in its reference to any one of claims 4 to 6, **characterized in that** the bearing surface (29) of the closure body (25, 25.1) is limited in the radial direction on the inside by the outside of the wall (26, 50).

13. The anchor point according to claim 11 or 12, **characterized in that** rolling elements (31) are arranged between the underside bearing surface (33) of the upper part (2, 2.1) and that of the closure body (25, 25.1).

14. The anchor point according to claim 13, **characterized in that** the rolling body bearing is formed by a needle bearing (30, 30.1).

15. The anchor point according to any one of claims 1 to 14, **characterized in that** the upper part (2) has an annular extension (34) which surrounds the closure body (25) radially on the outside in the axial direction over at least a portion and which forms a labyrinth seal (43) with the closure body (25).

16. The anchor point according to any one of claims 1 to 15, **characterized in that** the connecting means for connecting the anchor point (1) to an object (47) to be handled thereby is a threaded bolt (11).

## Revendications

1. Point de butée comprenant une partie inférieure (3, 3.1) pourvue d'un moyen de raccordement pour relier le point de butée (1, 1.1) à un objet (47) à manipuler avec celui-ci, et une partie supérieure (2, 2.1) rotative par rapport à la partie inférieure (3, 3.1) et reliée à celle-ci et pourvue d'un élément de raccordement (4) pour relier un moyen de levage, de butée ou d'arrimage, dans lequel la partie supérieure (2, 2.1) présente, pour le montage rotatif de la partie supérieure (2) par rapport à la partie inférieure (3, 3.1), une surface d'appui supérieure (12, 12.1) se rétrécissant de manière conique dans la direction axiale, la partie inférieure (3, 3.1) présente une surface d'appui inférieure (8) se rétrécissant de manière conique dans la même direction, et dans lequel des corps de palier à roulement (18) sont disposés entre les deux surfaces d'appui (8, 12 ; 8.1, 12.1) avec une forme définie par un axe de rotation et une surface d'enveloppe symétrique en rotation autour de l'axe de rotation, les axes de rotation étant alignés dans la direction du rétrécissement conique des surfaces d'appui (8, 12 ; 8.1, 12.1), **caractérisé en ce que** les corps de palier à roulement (18, 18.1) avec leurs axes de rotation forment un angle supérieur ou égal à 30° et inférieur à 60° par rapport à l'axe de rotation de la partie supérieure (2, 2.1), la partie inférieure (3, 3.1) présente une section de tête (9, 9.1) et une section d'arbre (10, 10.1) formée sur celle-ci et conçue avec un petit diamètre par rapport à la section de tête (9, 9.1), dans lequel la surface d'appui (12, 12.1) de la partie inférieure (3, 3.1) est fournie par une section de surface d'enveloppe de la section de tête (9, 9.1), laquelle partie inférieure (3, 3.1) traverse la partie supérieure (2, 2.1), et **en ce que** pour maintenir ensemble la partie inférieure (3, 3.1) et la partie supérieure (2, 2.1), il est prévu un corps de fermeture (25, 25.1) qui est relié à la section d'arbre (10, 10.1) de la partie inférieure (3, 3.1) et vient en prise sous la partie supérieure (2, 2.1) dans la direction radiale au moins par sections.

2. Point de butée selon la revendication 1, **caractérisé en ce que** le corps de fermeture (25, 25.1) est réalisé à la manière d'un disque dont la surface supérieure opposée à la partie inférieure (3, 3.1) forme une surface de butée (46) pour serrer le point de butée (1, 1.1) sur l'objet à manipuler (47).

3. Point de butée selon l'une des revendications 1 ou 2, **caractérisé en ce que** la section d'arbre (10) de la partie inférieure (3) présente un épaulement de butée (44) dirigé à l'opposé de sa section de tête (9) et le corps de fermeture (25) présente une contre-butée (45) conçue de manière complémentaire à celle-ci.

4. Point de butée selon l'une des revendications 1 ou 2, **caractérisé en ce qu'**une partie du corps de fermeture (25, 25.1) est une paroi (26, 50) qui entoure la section d'arbre (10, 10.1) de la partie inférieure (3, 3.1), s'étend dans la direction axiale de la partie inférieure (3, 3.1), ne vient pas en prise sous la partie supérieure (2, 2.1) et est équipée de moyens pour relier le corps de fermeture (25, 25.1) à la section d'arbre (10, 10.1) de la partie inférieure (3, 3.1).

5. Point de butée selon la revendication 4, **caractérisé en ce que** la paroi formée sur le corps de fermeture (25) est réalisée sous forme de paroi de verrouillage (26) avec un côté intérieur tourné vers la section d'arbre (10) et un côté extérieur tourné dans la direction opposée, et **en ce que** soit la paroi de verrouillage (26) sur son côté intérieur, soit la section d'arbre (10) de la partie inférieure (3) entourée par la paroi de verrouillage, présente une rainure de verrouillage (27) ménagée dans celle-ci et, de manière complémentaire, la section d'arbre (10) entourée par la paroi de verrouillage (26) ou la paroi de verrouillage (26) sur son côté intérieur présente à un endroit complémentaire un bourrelet de verrouillage (17) venant en prise dans la rainure de verrouillage (27).

6. Point de butée selon la revendication 4, **caractérisé en ce que** la surface frontale de la paroi (50) tournée vers la section de tête (9.1) de la partie inférieure (3.1) est conçue comme une butée qui agit contre la surface d'appui (2.1) de la partie inférieure (3.1).

7. Point de butée selon la revendication 4 ou 6, **caractérisé en ce que** la section d'arbre (10.1) est conçue sous la forme d'une section d'arbre filetée avec un filetage extérieur (48) et le corps de fermeture (25.1) est équipé sur son côté intérieur entourant la section d'arbre (10.1) d'un filetage intérieur complémentaire (49).

8. Point de butée selon l'une des revendications 1 à 7, **caractérisé en ce que** les corps de palier à roulement (18, 18.1) forment un angle de 45° ou d'environ 45°.

9. Point de butée selon l'une des revendications 1 à 8, **caractérisé en ce que** les corps de palier à roulement (18, 18.1) sont disposés et guidés dans une cage de corps de palier (19, 19.1).

10. Point de butée selon l'une des revendications 1 à 9, **caractérisé en ce que** l'angle d'inclinaison des deux surfaces d'appui (8, 12 ; 8.1, 12.1) est le même et les corps de palier à roulement (18, 18.1) présentent une surface d'enveloppe cylindrique.

11. Point de butée selon l'une des revendications 1 à 10, **caractérisé en ce que** la partie supérieure (2, 2.1) présente sur sa face inférieure tournée vers le corps de fermeture (25, 25.1) une autre surface d'appui (33) et le corps de fermeture (25, 25.1) présente sur sa face tournée vers la partie supérieure (2, 2.1) une surface d'appui (29) coopérant avec l'autre surface d'appui (33), de sorte qu'au moins lorsque l'élément de raccordement (4) de la partie supérieure (2, 2.1) est soumis à une charge transversale, celui-ci s'appuie avec sa surface d'appui inférieure (33) sur celle du corps de fermeture (25, 25.1).

12. Point de butée selon la revendication 11 en référence à l'une des revendications 4 à 6, **caractérisé en ce que** la surface d'appui (29) du corps de fermeture (25, 25.1) est limitée dans la direction radiale à l'intérieur par l'extérieur de la paroi (26, 50).

13. Point de butée selon la revendication 11 ou 12, **caractérisé en ce que** des corps de roulement (31) sont disposés entre la surface d'appui inférieure (33) de la partie supérieure (2, 2.1) et celle du corps de fermeture (25, 25.1).

14. Point d'arrêt selon la revendication 13, **caractérisé en ce que** le palier du corps de roulement est réalisé par un roulement à aiguilles (30, 30.1).

15. Point de butée selon l'une des revendications 1 à 14, **caractérisé en ce que** la partie supérieure (2) présente une extension annulaire (34) qui entoure le corps de fermeture (25) radialement à l'extérieur dans la direction axiale sur au moins une section et qui forme avec le corps de fermeture (25) un joint labyrinthe (43).

16. Point de butée selon l'une des revendications 1 à 15, **caractérisé en ce que** le moyen de raccordement pour relier le point de butée (1) à un objet (47) à manipuler par celui-ci est un boulon fileté (11).
